# EUROPÄISCHE PATENTSCHRIFT

(11) **EP 2 894 616 B1**
(45) Veröffentlichungstag und Bekanntmachung des Hinweises auf die Patenterteilung: **18.11.2015**
(21) Anmeldenummer: 14151027.1
(22) Anmeldetag: 14.01.2014
(51) Int. Cl.: G08G 1/0962, G08G 1/16

(54) **Onboard-Unit und Verfahren zur Information eines Fahrers**
Onboard unit and driver information method
Unité embarquée et procédé pour informer un conducteur

(43) Veröffentlichungstag der Anmeldung: 15.07.2015
(73) Patentinhaber: Kapsch TrafficCom AG, 1120 Wien (AT)
(72) Erfinder: Nagy, Oliver, 1190 Wien (AT); Povolny, Robert, 1190 Wien (AT)
(74) Vertreter: Weiser, Andreas

(56) Entgegenhaltungen:
- EP-A1- 1 832 844
- US-A1- 2012 004 835
- US-A1- 2012 010 797
- US-A1- 2013 282 264

## Beschreibung

Die vorliegende Erfindung betrifft eine Onboard-Unit für ein Fahrzeug zur Information des Fahrers beim Befahren eines Straßenabschnitts mit zumindest zwei nebeneinanderliegenden, eine gemeinsame Verkehrsfläche bildenden Fahrstreifen, wobei die Onboard-Unit eine Positionserfassungseinrichtung zum Ermitteln ihrer Position hat und über einen Messwert ihrer Geschwindigkeit verfügt. Die Erfindung betrifft ferner ein Verfahren für eine solche Onboard-Unit.

Im Straßenverkehr ist der Fahrer eines Fahrzeugs häufig stark belastet, um über das eigentliche Lenken des Fahrzeugs unter Berücksichtigung des umliegenden Verkehrs hinausgehende Informationen zu erfassen und darauf zu reagieren. Um das Befahren von Straßen in Straßennetzen einfacher, effizienter und sicherer zu machen, führen heutige Fahrzeuge technische Geräte mit unterschiedlichen spezifischen Funktionen mit. So gibt es beispielsweise Onboard-Units zur Abwicklung von Straßenmaut oder Onboard-Navigationsgeräte zur Orientierung, welche jeweils durch Ermitteln ihrer Position mithilfe einer Positionserfassungseinrichtung, z.B. eines Satellitennavigationssystems (Global Navigation Satellite System, GNSS), das Befahren eines Straßenabschnitts erkennen und bei Bedarf vermauten bzw. die weitere Routenplanung vornehmen. Dies entlastet den Fahrer und erhöht zugleich die Sicherheit im Straßenverkehr.

Aus der US 2013/282264 A1 ist es bekannt, mithilfe von Messfahrzeugen ortsbezogene Geschwindigkeitsmesswerte auf mehrspurigen Fahrbahnen aufzunehmen und aus einer Punktwolke solcher Messwerte in einer Zentrale rückblickend ein Geschwindigkeitsprofil für Fahrbahnabschnitte zu ermitteln, welches anhand der Punktwolkendichte auf Fahrspuren aufgelöst ist. Aus diesem historischen Fahrspurgeschwindigkeitsprofil werden hinterher Vorschläge zur Wahl einer Spur mit im dichten Fließverkehr mutmaßlich höherer Durchschnittsgeschwindigkeit erzeugt, um diese an Onboard-Units auszugeben.

Die vorliegende Erfindung setzt sich zum Ziel, eine Onboard-Unit und ein Verfahren zu schaffen, welche auf effiziente und präzise Weise den Fahrer im Falle eines Verkehrsstaus informieren bzw. anweisen.

Gemäß einem ersten Aspekt der Erfindung wird das Ziel mit einer Onboard-Unit der einleitend genannten Art erreicht, welche sich auszeichnet durch
einen an die Positionserfassungseinrichtung angeschlossenen Fahrstreifendetektor mit einem Kartenspeicher für eine di-gitale Straßenkarte zum Auffinden eines der ermittelten Position entsprechenden Fahrstreifens in der Straßenkarte,
einen Staudetektor zur Detektion eines Verkehrsstaus, wenn zumindest der Geschwindigkeitsmesswert einen vorgegebenen Schwellwert unterschreitet, und
eine an den Fahrstreifendetektor und den Staudetektor angeschlossene Auswerte- und Ausgabeeinheit, welche dafür ausgebildet ist, bei Detektion eines Verkehrsstaus eine für den aufgefundenen Fahrstreifen spezifische Fahrtrichtungsinformation auszugeben.

Dadurch wird erstmals im Fall eines Verkehrsstaus eine fahrstreifenspezifische Information für den Fahrer ausgegeben, durch welche er angeleitet wird, eine bestimmte Richtung innerhalb des Fahrstreifens einzuschlagen bzw. den Fahrstreifen zu wechseln. Die Onboard-Unit unterstützt dadurch das korrekte Fahren des einzelnen Fahrzeugs und die Koordination aller mit einer solchen Onboard-Unit ausgestatteten Fahrzeuge im Falle eines Verkehrsstaus. Dadurch wird z.B. das Bilden einer "Rettungsgasse" für die Zufahrt von Einsatzfahrzeugen zu einem den Stau verursachenden Unfall gefördert, und zwar unter Berücksichtigung der tatsächlichen baulichen Gegebenheiten des befahrenen Straßenabschnitts sowie lokaler oder regionaler Erfordernisse.

Gemäß einer vorteilhaften Ausführungsform der Erfindung ist die fahrstreifenspezifische Fahrtrichtungsinformation zu jedem Fahrstreifen des Straßenabschnitts im Kartenspeicher gespeichert und durch die Auswerte- und Ausgabeeinheit auslesbar. Das Speichern der Fahrtrichtungsinformation zu jedem Fahrstreifen im Kartenspeicher ermöglicht das direkte Auslesen und sofortige Ausgeben dieser Information an der Ausgabeeinheit. Eine über das bloße Auffinden der Fahrtrichtungsinformation im Kartenspeicher hinausgehende Auswertung ist dabei nicht erforderlich, sodass Rechenaufwand gespart wird. Ist für den befahrenen Straßenabschnitt im Kartenabschnitt keine Fahrtrichtungsinformation gespeichert, so erfolgt auch keine Ausgabe. Dadurch werden auch Straßenabschnitte ohne Rettungsgassenzwang im Fall eines Verkehrsstaus korrekt, d.h. ohne Ausgabe einer Information an den Fahrer, berücksichtigt.

Alternativ dazu ist die fahrstreifenspezifische Fahrtrichtungsinformation durch die Auswerte- und Ausgabeeinheit aus der Relativlage des aufgefundenen Fahrstreifens zu allen Fahrstreifen des Straßenabschnitts und aus einer gespeicherten Auswertevorschrift ermittelbar. Eine solche Auswertung ist speicherplatzschonend, da die Auswerteeinheit anhand einfacher Auswerteschritte gemäß der Auswertevorschrift, z.B. mithilfe einer Auswertetabelle, die spezifische Fahrtrichtungsinformation rasch ermitteln kann. Die ermittelte Fahrtrichtungsinformation wird darauf an der Ausgabeeinheit ausgegeben, ohne dass im Kartenspeicher zu jedem Fahrstreifen jedes Straßenabschnitts separat eine solche Information gespeichert ist. Dadurch wird Speichervolumen gespart. Ferner ist in diesem Fall ein Anpassen an geänderte Umgebungsbedingungen einfach durch Ändern der Auswertevorschrift z.B. mithilfe einer neuen Auswertetabelle, ohne Austausch der gesamten digitalen Straßenkarte mit darin gespeicherter Fahrtrichtungsinformation, möglich.

Gemäß einer günstigen Ausführungsform der Erfindung umfasst dazu die Onboard-Unit ferner einen Sendeempfänger zum Empfangen der Auswertevorschrift. Dadurch kann auf einfache, speicherplatzschonende Weise die Auswertevorschrift an regionale bzw. lokale Erfordernisse angepasst werden. So kann beispielsweise an Grenzen zwischen Regionen oder Ländern mit voneinander verschiedenen Vorschriften zur Bildung einer Rettungsgasse und somit mit verschiedenen Auswertevorschriften ein z.B. stationärer Sendeempfänger zum Übermitteln der jeweils neuen Auswertevorschrift an die vorbeifahrende Onboard-Unit, z.B. gemäß den Standards ETSI ITS-G5, DSRC, IEEE 802.11 p oder WAVE aber auch GSM, UMTS, LTE, WLAN etc., vorgesehen sein. Onboard-Units für Straßenmautsysteme verfügen meist über Funkschnittstellen der genannten Art und sind deshalb besonders geeignet.

Gemäß einer dazu alternativen Ausführungsform der Erfindung sind in der Onboard-Unit zumindest zwei voneinander verschiedene, jeweils unterschiedlichen Straßenabschnitten zugeordnete Auswertevorschriften gespeichert. Die Onboard-Unit kann dadurch beim Ermitteln der fahrstreifenspezifischen Fahrtrichtungsinformation jene Auswertevorschrift auswählen, welche dem befahrenen Straßenabschnitt zugeordnet ist. Ein gesonderter Sendeempfänger in der Onboard-Unit kann entfallen und die Onboard-Unit ist beim Ermitteln und Ausgeben der Fahrtrichtungsinformation nicht auf die Übertragungsqualität der gegebenenfalls kostenpflichtigen Funkverbindung angewiesen, sondern kann so z.B. bei Überschreiten einer Regions- oder Ländergrenze die Fahrtrichtungsinformation automatisch anhand der korrekten, dem Straßenabschnitt zugeordneten Auswertevorschrift ermitteln.

Besonders einfach und für den Fahrer klar verständlich ist es, wenn die von der Auswerte- und Ausgabeeinheit ausgegebene Fahrtrichtungsinformation eine Links/Rechts-Fahranweisung, gegebenenfalls mit grafischer Darstellung, ist. Die geringe Variantenvielfalt erfordert in diesem Fall auch nur sehr geringen Speicher- bzw. Auswerteaufwand. Auch kann eine solche Links/Rechts-Fahranweisung ganz einfach akustisch und/oder optisch an der Ausgabeeinheit ausgegeben werden. Ferner kann die Fahrtrichtungsinformation, wenn gewünscht, durch eine grafische Darstellung z.B. der Fahrspuren des befahrenen Straßenabschnitts unter Ergänzung der gültigen Vorschrift zur Bildung einer Rettungsgasse für den Fahrer visualisiert werden, wodurch das Situationsverständnis und die Reaktion des Fahrers beschleunigt werden.

In einer besonders bevorzugten Ausführungsform der Erfindung ist mithilfe eines Sendeempfängers der Onboard-Unit ein Geschwindigkeitsmesswert von zumindest einer von einem weiteren Fahrzeug mitgeführten weiteren Onboard-Unit empfangbar, wobei der Staudetektor zur Detektion des Verkehrsstaus zusätzlich den empfangenen Geschwindigkeitsmesswert berücksichtigt. Onboard-Units, insbesondere Onboard-Units für Straßenmautssysteme, werden heute vielfach mit derartigen Sendeempfängern zur Aufnahme einer Funkverbindung mit gleichartigen Onboard-Units, z.B. im Rahmen eines Verkehrstelematiksystems gemäß den Standards IEEE 802.11 p, DSRC, WAVE oder ETSI ITS-G5, ausgestattet und bilden dabei z.B. ein Ad-hoc-Netzwerk mit mehreren benachbarten Onboard-Units, wobei verschiedene Informationen über den Fahrzustand des die jeweilige Onboard-Unit mitführenden Fahrzeugs ausgetauscht werden. Dadurch ist es ganz einfach möglich, einen Verkehrsstau mit Unterstützung durch von anderen Fahrzeugen mitgeführten Onboard-Units zu detektieren und durch Abgleich bzw. Durchschnittsbildung eine höhere Treffsicherheit in der Detektion eines Verkehrsstaus zu erzielen. Ferner kann durch Informationsaustausch mit den Onboard-Units vorausfahrender Fahrzeuge ein Verkehrsstau bereits frühzeitig erkannt und die Reaktion darauf somit besser vorbereitet bzw. früher auf einen Verkehrsstau reagiert werden.

In einem zweiten Aspekt schafft die Erfindung ein Verfahren zur Information des Fahrers eines eine Onboard-Unit mitführenden Fahrzeugs beim Befahren eines Straßenabschnitts mit zumindest zwei nebeneinanderliegenden, eine gemeinsame Verkehrsfläche bildenden Fahrstreifen, umfassend:
Ermitteln der Position des Fahrzeugs mithilfe einer Positionserfassungseinrichtung der Onboard-Unit und Ermitteln eines Messwerts der Geschwindigkeit des Fahrzeugs;
Detektieren eines Verkehrsstaus, wenn zumindest der Geschwindigkeitsmesswert einen vorgegebenen Schwellwert unterschreitet, und
   bei Detektion eines Verkehrsstaus,
Auffinden eines der ermittelten Position entsprechenden Fahrstreifens in einer in der Onboard-Unit gespeicherten digitalen Straßenkarte und
Ausgeben einer für den aufgefundenen Fahrstreifen spezifischen Fahrtrichtungsinformation an einer Ausgabeeinheit der Onboard-Unit.

Bezüglich der Vorteile und weiterer bevorzugter Ausführungsformen des erfindungsgemäßen Verfahrens wird auf die vorangegangen Ausführungen zur Onboard-Unit verwiesen. Dabei ist es günstig, wenn die fahrstreifenspezifische Fahrtrichtungsinformation nur in dem Fall ermittelt wird, dass der Straßenabschnitt in der Straßenkarte zur Ausgabe einer Fahrtrichtungsinformation markiert ist. So entfällt das Ausgeben einer Fahrtrichtungsinformation, wenn das Fahrzeug einen Straßenabschnitt befährt, für den im Fall eines Verkehrsstaus keine besonderen Erfordernisse vorgesehen sind. Das Ausgeben einer überflüssigen Fahrtrichtungsinformation an der Ausgabeeinheit wird vermieden und der Fahrer nicht unnötig durch Informationen belastet.

Besonders bevorzugt liest die Onboard-Unit einen von zumindest einer von einem weiteren Fahrzeug mitgeführten weiteren Onboard-Unit über eine Funkverbindung empfangenen Geschwindigkeitsmesswert aus einer Common Awareness Message gemäß dem Standard ETSI ITS-G5 oder einer Basic Safety Message gemäß dem Standard IEEE 802.11p oder WAVE heraus. Dadurch muss keine bidirektionale Funkverbindung und kein Ad-hoc-Netzwerk zwischen den Fahrzeugen bzw. deren Onboard-Units aufgebaut werden; Geschwindigkeit und erforderlichenfalls Position der weiteren Onboard-Unit kann einfach der empfangenen, von jener periodisch ausgesendeten Nachricht entnommen werden.

Die Erfindung wird nachfolgend anhand von in den beigeschlossenen Zeichnungen dargestellten Ausführungsbeispielen näher erläutert. In den Zeichnungen zeigen:
Fig. 1 zwei von jeweils mehreren Fahrzeugen befahrene Straßenabschnitte bei erfindungsgemäßer Detektion eines Verkehrsstaus in einer schematischen Draufsicht;
Fig. 2 eine Onboard-Unit gemäß der Erfindung in einem Blockschaltbild; und
die Fig. 3a bis 3d verschiedene Ausführungsformen der digitalen Straßenkarte der Onboard-Unit von Fig. 2 mit fahrstreifenspezifischer Fahrtrichtungsinformation (Fig. 3a, 3b) bzw. fahrstreifenspezifischer Markierung (Fig. 3c, 3d).

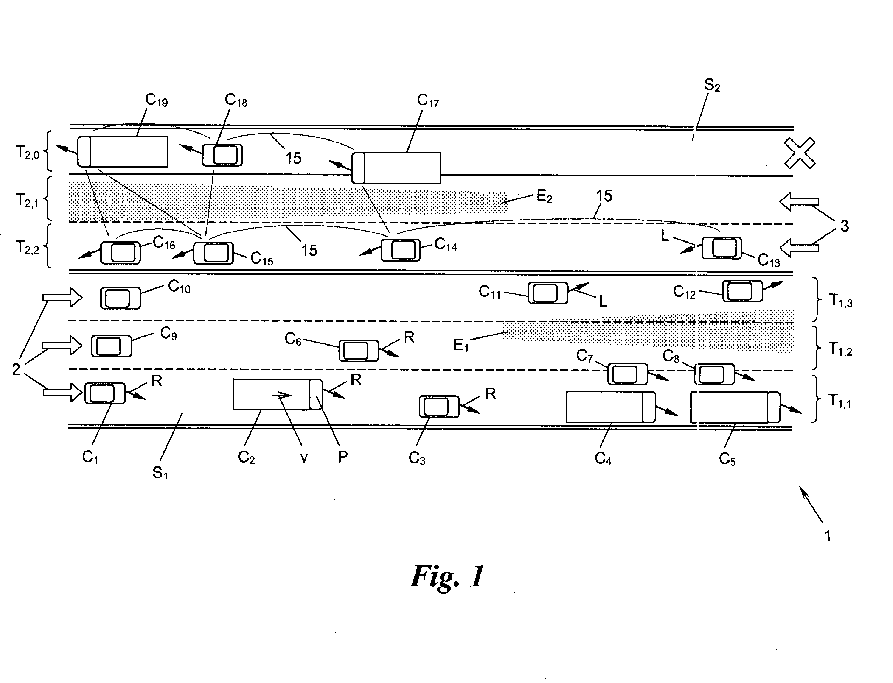

Gemäß Fig. 1 befahren mehrere Fahrzeuge C₁, C₂, ..., allgemein Cᵢ, auf einer Straße 1 zwei parallele Straßenabschnitte S₁, S₂, ..., allgemein Sₙ, mit entgegensetzten Fahrtrichtungen 2, 3. Die Straßenabschnitte Sₙ haben jeweils zumindest zwei nebeneinanderliegende, eine gemeinsame Verkehrsfläche bildende Fahrstreifen T_{1,1}, T_{1,2}, T_{1,3}, T_{2,1}, T_{2,2}, ..., allgemein T_{n,m}. Im Beispiel von Fig. 1 hat der Straßenabschnitt S₁ drei nebeneinanderliesende Fahrstreifen T_{1,1}, T_{1,2}, T_{1,3} einer Fahrtrichtung 2, wogegen der zweite Straßenabschnitt S₂ zwei nebeneinanderliegende Fahrstreifen T_{2,1}, T_{2,2} der entgegengesetzten Fahrtrichtung 3 und ferner einen Pannen- bzw. Seitenstreifen T_{2,0} hat.

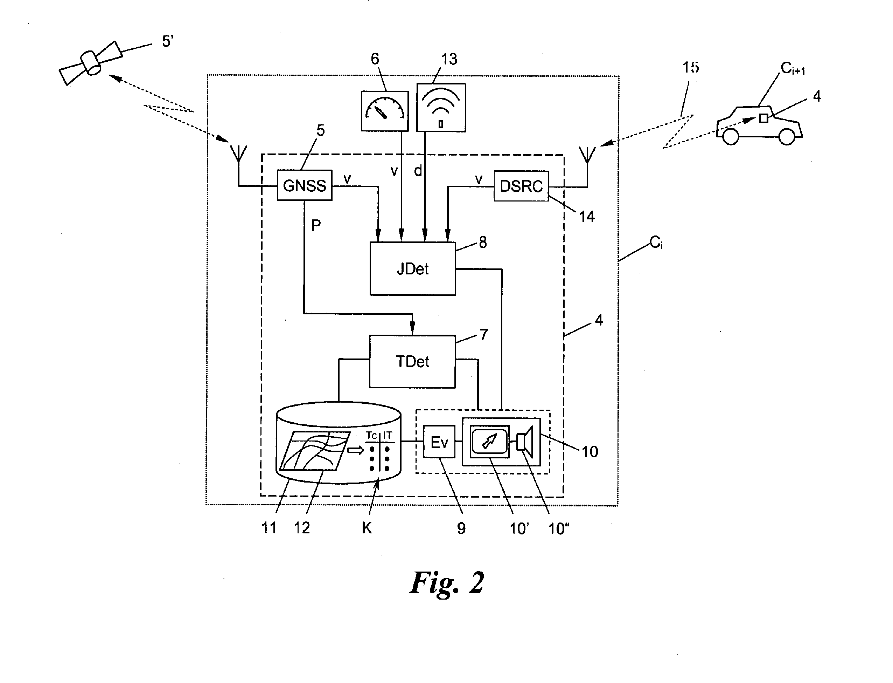

Jedes Fahrzeug Cᵢ führt eine Onboard-Unit 4 gemäß Fig. 2 mit. Die Onboard-Unit 4 verfügt über eine Positionserfassungseinrichtung 5, z.B. einen mithilfe von Satelliten 5' eines globalen Satellitennavigationssystems (Global Navigation Satellite System, GNSS) die Position P der Onboard-Unit 4 ermittelnden Satellitenempfänger. Alternativ könnte die Positionserfassungseinrichtung 5 die Position P auch mithilfe terrestrischer Funkbaken, z.B. Kurzreichweitenfunkbaken gemäß den Standards ETSI ITS-G5, DSRC (Dedicated Short Range Communication), IEEE 802.11p oder WAVE (Wireless Access in Vehicular Environments) und/oder Mobilfunk-Stationen, ermitteln (nicht dargestellt).

Ferner verfügt die Onboard-Unit 4 über einen Messwert ihrer Geschwindigkeit v; dieser Geschwindigkeitsmesswert v kann von der Positionserfassungseinrichtung 5 bereitgestellt werden und/oder von einem anderen Sensor, z.B. einem mit der Onboard-Unit 4 in Verbindung stehenden Sensor 6 des Fahrzeugs Cᵢ.

Zur Erhöhung der Genauigkeit der ermittelten Position P und Geschwindigkeit v kann die Onboard-Unit 4 ferner eine Mittelung mehrerer Messwerte vornehmen und/oder weitere Sensormesswerte, z.B. von einem Beschleunigungssensor (nicht dargestellt), bzw. Recheneinheiten zur prädikativen oder korrektiven Schätzung ihres Bewegungsverlaufs (Trajektorie) heranziehen.

Um den Fahrer im Fall eines Verkehrsstaus über das Bilden einer freien Rettungsgasse E₁, E₂, ..., allgemein Eₖ, zum Befahren z.B. durch Einsatzfahrzeuge zu informieren, hat die Onboard-Unit 4 einen Fahrstreifendetektor 7, einen Staudetektor 8 und eine Auswerteeinheit 9 mit angeschlossener Ausgabeeinheit 10.

Der an die Positionserfassungseinrichtung 5 angeschlossene Fahrstreifendetektor 7 hat einen Kartenspeicher 11 für eine digitale Straßenkarte 12 und greift auf diese zu, um den der ermittelten Position P entsprechenden Fahrstreifen T_{n,m} in der gespeicherten digitalen Straßenkarte 12 aufzufinden. Die digitale Straßenkarte 12 kann eine fahrstreifengenaue Abbildung der Straße 1 sein, beispielsweise mittels Vektoren oder Polygonzügen oder einer anderen, dem Fachmann bekannten Weise der Geoobjektdefinition, z.B. gemäß den Standards der Internationalen Organisation für Normung ISO 19115, ISO 19119, ISO 14825 oder ISO 17575, Teil 3. Der Fahrstreifendetektor 7 findet dabei den der Position P entsprechenden Fahrstreifen T_{n,m} direkt in der digitalen Straßenkarte 12 auf. Alternativ dazu könnte die digitale Straßenkarte 12 die Straße 1 ohne Fahrstreifen T_{n,m} abbilden, z.B. wieder in Form von Vektoren oder eines Polygonzugs, und für jeden Straßenabschnitt Sₙ die zugehörige Fahrstreifenanzahl Tcₙ enthalten, woraus der Fahrstreifendetektor 7 anhand des Abstandes der ermittelten Position P vom jeweiligen Vektor bzw. Polygonzug des Straßenabschnitts Sₙ und einer bekannten Fahrstreifenbreite den befahrenen Fahrstreifen T_{n,m} errechnet.

Der Staudetektor 8 detektiert einen Verkehrsstau auf Grundlage zumindest des Geschwindigkeitsmesswerts v, u.zw. daran, dass dieser einen vorgegebenen Schwellwert, z.B. 10 oder 20 km/h, unterschreitet. Der Staudetekor 8 kann gemäß Fig. 2 zur Detektion des Verkehrsstaus zusätzlich z.B. von einem Abstandssensor 13 des Fahrzeugs Cᵢ einen Abstandsmesswert d zu einem vorausfahrenden Fahrzeug und/oder weitere Geschwindigkeitsmesswerte berücksichtigen, wie weiter unten in Bezug auf den Straßenabschnitt S₂ von Fig. 1 eingehend erläutert wird.

Die an den Fahrstreifendetektor 7 und Staudetektor 8 angeschlossene Auswerte- und Ausgabeeinheit 9, 10 wird vom Staudetektor 8 gesteuert. Bei Detektion eines Verkehrsstaus greift die Auswerte- und Ausgabeeinheit 9, 10 auf den Kartenspeicher 11 zu und gibt daraufhin eine für den vom Fahrstreifendetektor 7 aufgefundenen Fahrstreifen T_{n,m} spezifische Fahrtrichtungsinformation I_{n,m} für den Fahrer an der Ausgabeeinheit 10 aus.

Im einfachsten Fall ist die an der Ausgabeeinheit 10 ausgegebene Fahrtrichtungsinformation I_{n,m} eine Links-/Rechts-Fahranweisung L, R, welche über eine Anzeige 10' und/oder einen Lautsprecher 10" der Ausgabeeinheit 10 ausgegeben wird. Alter nativ oder ergänzend könnte die Ausgabeeinheit 10 auf ihrer Anzeige 10' ferner z.B. eine grafische Darstellung des Straßenabschnitts Sₙ mit seinen Fahrstreifen T_{n,m} und eine detaillierte, fahrstreifenspezifische Darstellung der Fahranweisung bzw. der lokal gültigen Vorschriften zur Bildung einer Rettungsgasse Eₖ ausgeben. Zur Ausgabe der Fahrtrichtungsinformation I_{n,m} könnten optional auch in einem Fahrzeug Cᵢ vorhandene Lautsprecher oder Anzeigen, z.B. eines Autoradios bzw. Navigationssystems, herangezogen werden und die Onboard-Unit 4 dazu mit diesen Einbauelementen des Fahrzeugs Cᵢ verbunden sein.

Das Auffinden des Fahrstreifens T_{n,m} mittels des Fahrstreifendetektors 7 erfolgt - ebenso wie das Ermitteln der Position P des Fahrzeugs Cᵢ mithilfe der Positionserfassungseinrichtung 5 und/oder das Ermitteln der Geschwindigkeit v - in den dargestellten Beispielen wiederholt bzw. periodisch, könnte alternativ aber auch lediglich bei Bedarf z.B. durch eine externe Steuerung oder manuell ausgelöst werden. Der Fahrstreifendetektor 7 ist - ebenso wie die Auswerte- und Ausgabeeinheit 9, 10 - vom Staudetektor 8 der Onboard-Unit 4 gesteuert und wird von diesem nur bei Detektion eines Verkehrsstaus aktiviert, könnte alternativ jedoch auch kontinuierlich arbeiten.

Es versteht sich, dass die Onboard-Unit 4 in ein bestehendes elektronisches Gerät des Fahrzeugs Cᵢ integriert oder durch dieses gebildet sein kann, z.B. eine Maut-Onboard-Unit für ein Straßenmautsystem, oder durch Vernetzung von in einem Fahrzeug Cᵢ bereits vorhandenen Modulen als modularisierte ("virtuelle") Onboard-Unit aufgebaut sein kann. Die Verbindung bzw. Vernetzung der Module kann dabei drahtgebunden, z.B. mittels Flex-Ray™ oder CAN-Bus (Controller Area Network), oder drahtlos, z.B. mittels Bluetooth oder WLAN, erfolgen.

Im Beispiel von Fig. 1 erhalten jene Fahrzeuge C₁ bis C₈, deren Onboard-Units 4 einen der beiden rechten Fahrstreifen T_{1,1}, T_{1,2} des Straßenabschnitts S₁ als den der jeweils ermittelten Position P entsprechenden Fahrstreifen in der Straßenkarte 12 aufgefunden haben, angesichts des sich im Straßenabschnitt S₁ (an der rechten Seite in Fig. 1) bildenden Verkehrstaus, d.h. infolge ihres jeweils geringen Geschwindigkeitsmesswerts v, eine Rechts-Fahranweisung R. Andererseits erhalten jene Fahrzeuge C₁₁ und C₁₂, deren Onboard-Units 4 den Fahrstreifen T_{1,3} als den der ermittelten Position P entsprechenden Fahrstreifen aufgefunden haben, eine Links-Fahranweisung L als Fahrtrichtungsinformation I_{1,3}. Hingegen detektieren die Onboard-Units 4 der Fahrzeuge C₉ und C₁₀ infolge ihrer (bisher noch) höheren Geschwindigkeitsmesswerte v keinen Verkehrsstau und geben somit auch keine Fahrtrichtungsinformation aus. Somit bilden die den ersten Straßenabschnitt S₁ befahrenden Fahrzeuge C₁ bis C₈, C₁₁ und C₁₂ im Beispiel von Fig. 1 bei Verkehrsstau die zum Befahren durch Einsatzfahrzeuge freie Rettungsgasse E₁.

Wenn gewünscht, kann auch eine anderslautende fahrstreifenspezifische Fahrtrichtungsinformation I_{n,m} ausgegeben werden. So könnten z.B. die Fahrzeuge C₆ bis C₈, C₁₁, C₁₂ der beiden linken Fahrstreifen T_{1,2}, T_{1,3} eine Links-Fahranweisung L und nur jene auf dem rechten Fahrstreifen T_{1,1} eine Rechts-Fahranweisung R erhalten etc.

Gemäß Fig. 2 kann die Onboard-Unit 4 eines Fahrzeugs Cᵢ auch über einen Sendeempfänger 14 verfügen, mit welchem sie eine Funkverbindung 15, z.B. gemäß den Standards ETSI ITS-G5, DSRC, IEEE 802.11p oder WAVE, mit zumindest einer von einem weiteren Fahrzeug Cᵢ₊₁ mitgeführten weiteren Onboard-Unit 4 aufbaut. Die erstgenannte Onboard-Unit 4 des Fahrzeugs Cᵢ empfängt dabei einen Geschwindigkeitsmesswert v von der weiteren Onboard-Unit 4 des Fahrzeugs Cᵢ₊₁, welchen der Staudetektor 8 der erstgenannten Onboard-Unit 4 bei der Detektion des Verkehrsstaus für das Bilden der Rettungsgasse Eₖ zusätzlich berücksichtigt. Der Geschwindigkeitsmesswert v der weiteren Onboard-Unit 4 des weiteren Fahrzeugs Cᵢ₊₁ kann dabei aus einer in der erstgenannten Onboard-Unit 4 empfangenen Common Awareness Message (CAM) der weiteren Onboard-Unit 4 gemäß dem Standard ETSI ITS-G5 oder aus einer Basic Safety Message (BSM) der weiteren Onboard-Unit 4 gemäß den Standards IEEE 802.11p oder WAVE herausgelesen werden.

Auf diese Weise steht der Onboard-Unit 4 eines Fahrzeugs Cᵢ ein zusätzlicher Geschwindigkeitsmesswert v von zumindest einer Onboard-Unit 4 eines z.B. vorausfahrenden Fahrzeugs Cᵢ₊₁ zur Verfügung, sodass sie die Bildung eines Verkehrsstaus bereits frühzeitig erkennen kann, wie dies in Fig. 1 für das über die Funkverbindung 15 mit dem Fahrzeug C₁₄ kommunizierende Fahrzeug C₁₃ des Straßenabschnitts S₂ dargestellt ist, welches so bereits frühzeitig eine Fahranweisung - hier die Links-Fahranweisung L - ermitteln kann. Ein vorausfahrendes Fahrzeug Cᵢ₊₁ erkennt die Onboard-Unit 4 des Fahrzeugs Cᵢ dabei z.B. an der von diesem z.B. in der CAM oder BSM mitempfangenen Position P des Fahrzeugs Cᵢ₊₁ relativ zu seiner eigenen Position P.

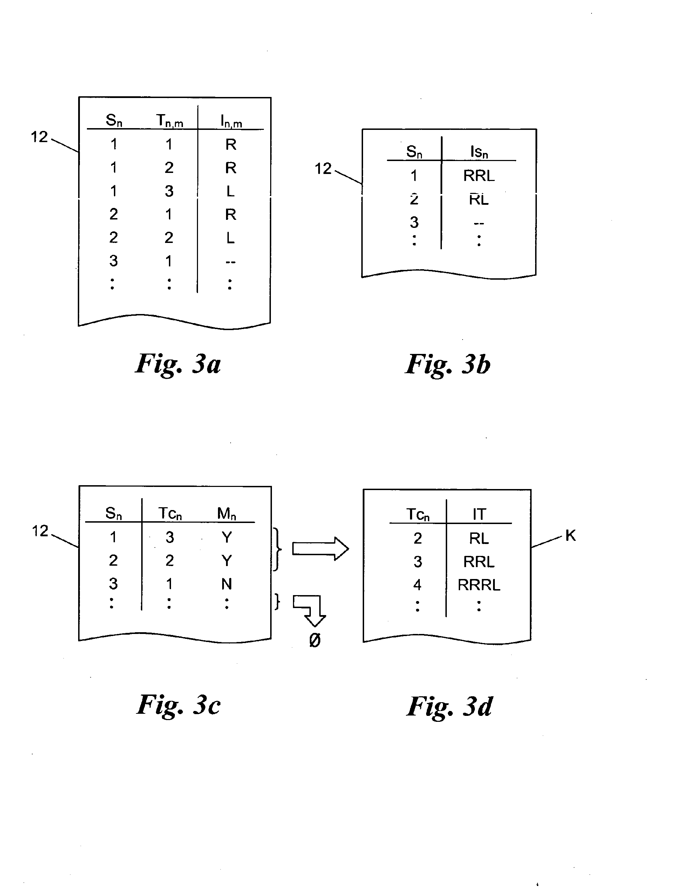

Die Fig. 3a bis 3d zeigen verschiedene Beispiele für das Ermitteln der fahrstreifenspezifischen Fahrtrichtungsinformation I_{n,m} durch die Auswerteeinheit 9.

Im Beispiel von Fig. 3a ist zu jedem Fahrstreifen T_{n,m} jedes Straßenabschnitts Sₙ separat eine Links/Rechts-Fahranweisung L bzw. R als Fahrtrichtungsinformation I_{n,m} in der Straßenkarte 12 gespeichert, welche die Auswerteeinheit 9 bei Detektion eines Verkehrsstaus für den aufgefundenen Fahrstreifen T_{n,m} direkt ausliest - z.B. die Rechts-Fahranweisung R für das Fahrzeug C₆ auf dem Fahrstreifen T_{1,2}. Alternativ dazu könnte, wie im Beispiel von Fig. 3b dargestellt, die fahrstreifenspezifische Fahrtrichtungsinformation I_{n,m} als straßenabschnittsspezifisches Datenfeld Isₙ kodiert in der Straßenkarte 12 gespeichert sein. Die Auswerteeinheit 9 ermittelt dabei die dem befahrenen Fahrstreifen T_{n,m} entsprechende Fahrtrichtungsinformation I_{n,m} aus der Zeichenreihenfolge - z.B. für das Fahrzeug C₆ auf dem zweiten Fahrstreifen T_{1,2} des Straßenabschnitts S₁ die zweite Stelle des Datenfelds Is₁ = "RRL", somit die Rechts-Fahranweisung R.

Enthält ein Straßenabschnitt Sₙ, z.B. der Straßenabschnitt S₃ in den Fig. 3a und 3b, keine fahrstreifenspezifische Fahrtrichtungsinformation T_{n,m}, weil es sich z.B. um einen einspurigen oder innerstädtischen Straßenabschnitt Sₙ handelt, wo keine Rettungsgasse Eₖ gebildet werden soll, so gibt die Onboard-Unit 4 auch bei Verkehrsstau keine Information an den Fahrer aus.

Gemäß den Fig. 3c und 3d kann in einer weiteren alternativen Variante in der digitalen Straßenkarte 12 für jeden Straßenabschnitt Sₙ neben einer straßenabschnittsspezifischen Fahrstreifenanzahl Tcₙ lediglich eine Markierung Mₙ gespeichert sein. Eine gesetzte Markierung Mₙ = "Y" signalisiert dabei, dass für diesen Straßenabschnitt Sₙ eine Fahrtrichtungsinformation I_{n,m} ermittelt werden soll. In diesem Fall greift die Auswerteeinheit 9 der Onboard-Unit 4 des Fahrzeugs Cᵢ auf eine z.B. im Kartenspeicher 11 oder einem anderen, in Fig. 2 nicht gezeigten Speicher der Onboard-Unit 4 gespeicherte Auswertevorschrift K zu, welche die Fahrstreifenanzahl Tcₙ mit einem die Fahrtrichtungsinformation I_{n,m} umfassenden fahrstreifenanzahlabhängigen Datenfeld IT verknüpft, z.B. wie in Fig. 3d dargestellt, und ermittelt daraus für das Fahrzeug Cᵢ - anhand der Relativlage des aufgefunden Fahrstreifens T_{n,m} zu allen Fahrstreifen des Straßenabschnitts Sₙ - die zugehörige Fahrtrichtungsinformation I_{n,m} nach der in Bezug auf die Beispiele von Fig. 3a oder 3b beschriebenen Art und Weise. So wird beispielsweise für das Fahrzeug C₆ auf dem mittleren von drei Fahrstreifen T_{1,1}, T_{1,2}, T_{1,3} des Straßenabschnitts S₁ die in der Mitte des für Tcₙ = 3 gültigen Datenfelds IT = "RRL" hinterlegte Rechts-Fahranweisung R als Fahrtrichtungsinformation I_{n,m} ermittelt.

Die Auswertevorschrift K bzw. das fahrstreifenanzahlabhängige Datenfeld IT der Auswertevorschrift K kann dabei zur Anpassung an unterschiedliche Vorschriften zur Bildung einer Rettungsgasse, z.B. in verschiedenen Ländern oder Regionen, über den Sendeempfänger 14 oder eine andere Schnittstelle der Onboard-Unit 4, z.B. an Landes- oder Regionsgrenzen, empfangen und in der Onboard-Unit 4 gespeichert werden. Dabei kann die Onboard-Unit 4 eine dem Land der Zulassungsbehörde entsprechende Auswertevorschrift K vorab speichern und bei jedem Übertritt in ein Land oder eine Region mit davon verschiedenen Vorschriften die zusätzlich empfangene Auswertevorschrift K stattdessen oder zusätzlich speichern.

Alternativ dazu könnte die Onboard-Unit 4 zumindest zwei voneinander verschiedene, jeweils unterschiedlichen Straßenabschnitten Sₙ zugeordnete Auswertevorschriften K speichern und beim Ermitteln der fahrstreifenspezifischen Fahrtrichtungsinformation I_{n,m} jene Auswertevorschrift K auswählen, die dem jeweils als befahren detektierten Straßenabschnitt Sₙ zugeordnet ist.

So kann z.B. allen Straßenabschnitten Sₙ eines bestimmten geografischen Bereichs, beispielsweise eines Landes oder einer Region mit einheitlichen Vorschriften zum Bilden einer Rettungsgasse, eine erste und den Straßenabschnitten Sₙ eines anderen geografischen Bereichs mit anderen Rettungsgassenvorschriften eine davon verschiedene zweite Auswertevorschrift K zugeordnet werden. Dadurch kann die Onboard-Unit 4 bei einem Bereichswechsel, z.B. einem Grenzübertritt von einem Land in ein anderes, anhand ihrer jeweils ermittelten Position P gleichsam "automatisch" die jeweils anzuwendende Auswertevorschrift K auswählen.

Ist hingegen, wie in Fig. 3c für den Straßenabschnitt S₃ gezeigt, der Merker Mₙ für einen Straßenabschnitt Sₙ nicht gesetzt (Mₙ = "N") so wird keine Fahrtrichtungsinformation I_{n,m} ermittelt bzw. ausgegeben.

Die Erfindung ist nicht auf die dargestellten Ausführungsformen beschränkt, sondern umfasst alle Varianten und Modifikationen, die in den Rahmen der angeschlossen Ansprüche fallen.

## Patentansprüche

1. Onboard-Unit für ein Fahrzeug (Cᵢ) zur Information des Fahrers beim Befahren eines Straßenabschnitts (Sₙ) mit zumindest zwei nebeneinanderliegenden, eine gemeinsame Verkehrsfläche bildenden Fahrstreifen (T_{n,m}), wobei die Onboard-Unit (4) eine Positionserfassungseinrichtung (5) zum Ermitteln ihrer Position (P) hat und über einen Messwert ihrer Geschwindigkeit (v) verfügt, **gekennzeichnet durch**
einen an die Positionserfassungseinrichtung (5) angeschlossenen Fahrstreifendetektor (7) mit einem Kartenspeicher (11) für eine digitale Straßenkarte (12) zum Auffinden eines der ermittelten Position (P) entsprechenden Fahrstreifens (T_{n,m}) in der Straßenkarte (12),
einen Staudetektor (8) zur Detektion eines Verkehrsstaus wenn zumindest der Geschwindigkeitsmesswert (v) einen vorgegebenen Schwellwert unterschreitet, und
eine an den Fahrstreifendetektor (7) und den Staudetektor (8) angeschlossene Auswerte- und Ausgabeeinheit (9, 10), welche dafür ausgebildet ist, bei Detektion eines Verkehrsstaus eine für den aufgefundenen Fahrstreifen (T_{n,m}) spezifische Fahrtrichtungsinformation (I_{n,m}) auszugeben.

2. Onboard-Unit nach Anspruch 1, **dadurch gekennzeichnet, dass** die fahrstreifenspezifische Fahrtrichtungsinformation (I_{n,m}) zu jedem Fahrstreifen (T_{n,m}) des Straßenabschnitts (Sₙ) im Kartenspeicher (11) gespeichert und durch die Auswerte- und Ausgabeeinheit (9, 10) auslesbar ist.

3. Onboard-Unit nach Anspruch 1, **dadurch gekennzeichnet, dass** die fahrstreifenspezifische Fahrtrichtungsinformation (I_{n,m}) durch die Auswerte- und Ausgabeeinheit (9, 10) aus der Relativlage des aufgefundenen Fahrstreifens (T_{n,m}) zu allen Fahrstreifen (T_{n,m}) des Straßenabschnitts (Sₙ) und aus einer gespeicherten Auswertevorschrift (K) ermittelbar ist.

4. Onboard-Unit nach Anspruch 3, **dadurch gekennzeichnet, dass** die Onboard-Unit (4) ferner einen Sendeempfänger (14) zum Empfangen der Auswertevorschrift (K) umfasst.

5. Onboard-Unit nach Anspruch 3, **dadurch gekennzeichnet, dass** in der Onboard-Unit (4) zumindest zwei voneinander verschiedene, jeweils unterschiedlichen Straßenabschnitten (Sₙ) zugeordnete Auswertevorschriften (K) gespeichert sind.

6. Onboard-Unit nach einem der Ansprüche 1 bis 5, **dadurch gekennzeichnet, dass** die von der Auswerte- und Ausgabeeinheit (9, 10) ausgegebene Fahrtrichtungsinformation (I_{n,m}) eine Links/Rechts-Fahranweisung (L, R), gegebenenfalls mit grafischer Darstellung, ist.

7. Onboard-Unit nach einem der Ansprüche 1 bis 6, **dadurch gekennzeichnet, dass** mithilfe eines Sendeempfängers (14) der Onboard-Unit (4) ein Geschwindigkeitsmesswert (v) von zumindest einer von einem weiteren Fahrzeug (Cᵢ₊₁) mitgeführten weiteren Onboard-Unit (4) empfangbar ist, wobei der Staudetektor (8) zur Detektion des Verkehrsstaus zusätzlich den empfangenen Geschwindigkeitsmesswert (v) berücksichtigt.

8. Verfahren zur Information des Fahrers eines eine Onboard-Unit (4) mitführenden Fahrzeugs (Cᵢ) beim Befahren eines Straßenabschnitts (Sₙ) mit zumindest zwei nebeneinanderliegenden, eine gemeinsame Verkehrsfläche bildenden Fahrstreifen (T_{n,m}), umfassend:
Ermitteln der Position (P) des Fahrzeugs (Cᵢ) mithilfe einer Positionserfassungseinrichtung (5) der Onboard-Unit (4) und Ermitteln eines Messwerts der Geschwindigkeit (v) des Fahrzeugs (Cᵢ);
Detektieren eines Verkehrsstaus, wenn zumindest der Geschwindigkeitsmesswert (v) einen vorgegebenen Schwellwert unterschreitet, und
bei Detektion eines Verkehrsstaus,
Auffinden eines der ermittelten Position (P) entsprechenden Fahrstreifens (T_{n,m}) in einer in der Onboard-Unit (4) gespeicherten digitalen Straßenkarte (12) und
Ausgeben einer für den aufgefundenen Fahrstreifen (T_{n,m}) spezifischen Fahrtrichtungsinformation (I_{n,m}) an einer Ausgabeeinheit (10) der Onboard-Unit (4).

9. Verfahren nach Anspruch 8, **dadurch gekennzeichnet, dass** zu jedem Fahrstreifen (T_{n,m}) des Straßenabschnitts (Sₙ) eine Fahrtrichtungsinformation (I_{n,m}) in der Straßenkarte (12) gespeichert ist und die für den aufgefundenen Fahrstreifen (T_{n,m}) spezifische Fahrtrichtungsinformation (I_{n,m}) aus der Straßenkarte (12) ausgelesen wird.

10. Verfahren nach Anspruch 8, **dadurch gekennzeichnet, dass** die fahrstreifenspezifische Fahrtrichtungsinformation (I_{n,m}) aus der Relativlage des aufgefundenen Fahrstreifens (T_{n,m}) zu allen Fahrstreifen (T_{n,m}) des Straßenabschnitts (Sₙ) und aus einer gespeicherten Auswertevorschrift (K) ermittelt wird.

11. Verfahren nach Anspruch 10, **dadurch gekennzeichnet, dass** die Onboard-Unit (4) die Auswertevorschrift (K) über eine Funkverbindung (15) empfängt und speichert.

12. Verfahren nach Anspruch 10, **dadurch gekennzeichnet, dass** die Onboard-Unit (4) zumindest zwei voneinander verschiedene, jeweils unterschiedlichen Straßenabschnitten (Sₙ) zugeordnete Auswertevorschriften (K) speichert, wobei beim Ermitteln der fahrstreifenspezifischen Fahrtrichtungsinformation (I_{n,m}) jene Auswertevorschrift (K) ausgewählt wird, welche dem befahrenen Straßenabschnitt (Sₙ) zugeordnet ist.

13. Verfahren nach einem der Ansprüche 8 bis 12, **dadurch gekennzeichnet, dass** die Fahrtrichtungsinformation (I_{n,m}) nur in dem Fall ermittelt wird, dass der Straßenabschnitt (Sₙ) in der Straßenkarte (12) zur Ausgabe einer Fahrtrichtungsinformation (I_{n,m}) markiert ist.

14. Verfahren nach einem der Ansprüche 8 bis 13, **dadurch gekennzeichnet, dass** die Ausgabeeinheit (10) als Fahrtrichtungsinformation (I_{n,m}) eine Links/Rechts-Fahranweisung (L, R), gegebenenfalls mit grafischer Darstellung, ausgibt.

15. Verfahren nach einem der Ansprüche 8 bis 14, **dadurch gekennzeichnet, dass** die Onboard-Unit (4) ferner einen Geschwindigkeitsmesswert (v) von zumindest einer von einem weiteren Fahrzeug (Cᵢ₊₁) mitgeführten weiteren Onboard-Unit (4) über eine Funkverbindung (15) empfängt, wobei beim Detektieren des Verkehrsstaus zusätzlich der empfangene Geschwindigkeitsmesswert (v) berücksichtigt wird.

16. Verfahren nach Anspruch 15, **dadurch gekennzeichnet, dass** die Onboard-Unit (4) den empfangenen Geschwindigkeitsmesswert (v) aus einer Common Awareness Message gemäß dem Standard ETSI ITS-G5 oder einer Basic Safety Message gemäß dem Standard IEEE 802.11p oder WAVE herausliest.

## Claims

1. An onboard unit for a vehicle (Cᵢ) for providing information to the driver when travelling on a road portion (Sₙ) with at least two adjacent lanes (T_{n,m}) forming a common traffic area, wherein the onboard unit (4) has a position detection device (5) for determining the position (P) thereof and has a measured value of the speed (v) thereof, **characterised by**
a lane detector (7), connected to the position detection device (5), with a map memory (11) for a digital road map (12) for locating in the road map (12) a lane (T_{n,m}) corresponding to the determined position (P),
a traffic jam detector (8) for detecting a traffic jam when at least the speed measured value (v) falls below a predefined threshold value, and
an evaluation and output unit (9, 10), which is connected to the lane detector (7) and the traffic jam detector (8) and which is configured, upon detection of a traffic jam, to output direction of travel information (I_{n,m}) specific for the located lane (T_{n,m}).

2. The onboard unit according to Claim 1, **characterised in that** the lane-specific direction of travel information (I_{n,m}) for each lane (T_{n,m}) of the road portion (Sₙ) is stored in the map memory (11) and can be read out by the evaluation and output unit (9, 10).

3. The onboard unit according to Claim 1, **characterised in that** the lane-specific direction of travel information (I_{n,m}) can be determined by the evaluation and output unit (9, 10) from the position of the located lane (T_{n,m}) relative to all lanes (T_{n,m}) of the road portion (Sₙ) and from a stored set of evaluation rules (K).

4. The onboard unit according to Claim 3, **characterised in that** the onboard unit (4) further comprises a transceiver (14) for receiving the set of evaluation rules (K).

5. The onboard unit according to Claim 3, **characterised in that** at least two different sets of evaluation rules (K) each assigned to different road portions (Sₙ) are stored in the onboard unit (4).

6. The onboard unit according to one of Claims 1 to 5, **characterised in that** the direction of travel information (I_{n,m}) output by the evaluation and output unit (9, 10) is an instruction to travel to the left/right (L, R), optionally with graphical illustration.

7. The onboard unit according to one of Claims 1 to 6, **characterised in that** a speed measured value (v) can be received with the aid of a transceiver (14) of the onboard unit (4) from at least one further onboard unit (4) carried by a further vehicle (Cᵢ₊₁), wherein the traffic jam detector (8) additionally takes into consideration the received speed measured value (v) for detection of the traffic jam.

8. A method for providing information to the driver of a vehicle (Cᵢ) carrying an onboard unit (4) when driving on a road portion (Sₙ) with at least two adjacent lanes (T_{n,m}) forming a common traffic area, said method comprising the following steps:
determining the position (P) of the vehicle (Cᵢ) with the aid of a position detection device (5) of the onboard unit (4) and determining a measured value of the speed (v) of the vehicle (Cᵢ) ;
detecting a traffic jam when at least the speed measured value (v) falls below a predefined threshold value, and,
upon detection of a traffic jam,
locating a lane (T_{n,m}), corresponding to the determined position (P), in a digital road map (12) stored in the onboard unit (4) and
outputting at an output unit (10) of the onboard unit (4) direction of travel information (I_{n,m}) specific for the located lane (T_{n,m}).

9. The method according to Claim 8, **characterised in that** direction of travel information (I_{n,m}) for each lane (T_{n,m}) of the road portion (Sₙ) is stored in the road map (12) and the direction of travel information (I_{n,m}) specific for the located lane (T_{n,m}) is read out from the road map (12).

10. The method according to Claim 8, **characterised in that** the lane-specific direction of travel information (I_{n,m}) is determined from the position of the located lane (T_{n,m}) relative to all lanes (T_{n,m}) of the road portion (Sₙ) and from a stored set of evaluation rules (K).

11. The method according to Claim 10, **characterised in that** the onboard unit (4) receives and stores the set of evaluation rules (K) via a radio connection (15).

12. The method according to Claim 10, **characterised in that** the onboard unit (4) stores at least two different sets of evaluation rules (K) each assigned to different road portions (Sₙ), wherein, when determining the lane-specific direction of travel information (I_{n,m}), the set of evaluation rules (K) assigned to the used road portion (Sₙ) is selected.

13. The method according to one of Claims 8 to 12, **characterised in that** the direction of travel information (I_{n,m}) is determined only in the case that the road portion (Sₙ) is marked in the road map (12) for output of direction of travel information (I_{n,m}).

14. The method according to one of Claims 8 to 13, **characterised in that** the output unit (10), as direction of travel information (I_{n,m}), outputs an instruction to drive to the left/right (L, R), optionally with graphical illustration.

15. The method according to one of Claims 8 to 14, **characterised in that** the onboard unit (4) further receives, via a radio connection (15), a speed measured value (v) from at least one further onboard unit (4) carried by a further vehicle (Cᵢ₊₁), wherein the received speed measured value (v) is additionally taken into consideration with detection of the traffic jam.

16. The method according to Claim 15, **characterised in that** the onboard unit (4) reads out the received speed measured value (v) from a Common Awareness Message according to the standard ETSI ITS-G5 or from a Basic Safety Message according to the standard IEEE 802.11p or WAVE.

## Revendications

1. Unité embarquée pour un véhicule (Cᵢ) destinée à l'information du conducteur lors de la conduite sur un tronçon de route (Sₙ) avec au moins deux voies de circulation (T_{n,m}) situées l'une à côté de l'autre, formant une surface de circulation commune, dans lequel l'unité embarquée (4) a un équipement de détermination de position (5) pour déterminer sa position (P) et dispose d'une valeur de mesure de sa vitesse (v), **caractérisée par**
un détecteur de voie de circulation (7) associé à l'équipement de détection de position (5) avec une mémoire à base de cartes (11) pour une carte routière (12) numérique afin de trouver une voie de circulation (T_{n,m}) dans la carte routière (12) correspondant à la position (P) déterminée,
un détecteur de bouchons (8) pour la détection d'un bouchon de circulation lorsqu'au moins la valeur de mesure de la vitesse (v) est inférieure à une valeur de seuil prédéfinie, et
une unité d'évaluation et d'indication (9, 10) reliée au détecteur de voie de circulation (7) et au détecteur de bouchons (8), laquelle est conçue pour indiquer une information de direction de circulation (I_{n,m}) spécifique pour la voie de circulation (T_{n,m}) trouvée en cas de détection d'un bouchon de circulation.

2. Unité embarquée selon la revendication 1, **caractérisée en ce que** l'information de direction de circulation (I_{n,m}) spécifique pour la voie de circulation est mémorisée dans la mémoire à base de cartes (11) pour chaque voie de circulation (T_{n,m}) du tronçon de route (Sₙ) et peut être lue par l'unité d'évaluation et d'indication (9, 10).

3. Unité embarquée selon la revendication 1, **caractérisée en ce que** l'information de direction de circulation (I_{n,m}) spécifique pour la voie de circulation peut être déterminée par l'unité d'évaluation et d'indication (9, 10) à partir de la position relative de la voie de circulation (T_{n,m}) trouvée par rapport à toutes les voies de circulation (T_{n,m}) du tronçon de route (Sₙ) et à partir d'une consigne d'évaluation (K) mémorisée.

4. Unité embarquée selon la revendication 3, **caractérisée en ce que** l'unité embarquée (4) comprend en outre un émetteur-récepteur (14) pour la réception de la consigne d'évaluation (K).

5. Unité embarquée selon la revendication 3, **caractérisée en ce qu'**au moins deux consignes d'évaluation (K) différentes l'une de l'autre, associées chaque fois à des tronçons de route (Sₙ) différents, sont mémorisées dans l'unité embarquée (4).

6. Unité embarquée selon l'une des revendications 1 à 5, **caractérisée en ce que** l'information de direction de circulation (I_{n,m}) délivrée par l'unité d'évaluation et d'indication (9, 10) est un conseil de conduite à gauche/à droite (L,R), éventuellement avec une représentation graphique.

7. Unité embarquée selon l'une des revendications 1 à 6, **caractérisée en ce qu'**avec l'aide d'un émetteur-récepteur (14) de l'unité embarquée (4) une valeur de mesure de la vitesse (v) d'au moins une autre unité embarquée (4) transportée par un autre véhicule (cᵢ₊₁) peut être saisie, dans lequel le détecteur de bouchons (8) tient compte de manière complémentaire de la valeur mesurée de la vitesse (v) reçue pour la détection du bouchon de circulation.

8. Procédé destiné à l'information du conducteur d'un véhicule (Cᵢ) transportant une unité embarquée (4) lors de la conduite sur un tronçon de route (Sₙ) avec au moins deux voies de circulation (T_{n,m}) situées l'une à côté de l'autre, formant une surface de circulation commune, comprenant :
une détermination de la position (P) du véhicule (Cᵢ) à l'aide d'un équipement de détermination de position (5) de l'unité embarquée (4) et une détermination d'une valeur de mesure de la vitesse (v) ;
une détection d'un bouchon de circulation lorsqu'au moins la valeur de mesure de la vitesse (v) est inférieure à une valeur de seuil prédéfinie, et
en cas de détection d'un bouchon de circulation,
une recherche d'une voie de circulation (T_{n,m}) correspondant à la position (P) déterminée dans une carte routière (12) numérique mémorisée dans l'unité embarquée (4), et
une indication d'une information de direction de circulation (I_{n,m}) spécifique pour la voie de circulation (T_{n,m}) trouvée sur une unité d'indication (10) de l'unité embarquée (4).

9. Procédé selon la revendication 8, **caractérisé en ce qu'**une information de direction de circulation (I_{n,m}) est mémorisée dans la carte routière (12) pour chaque voie de circulation (T_{n,m}) du tronçon de route (Sₙ) et que l'information de direction de circulation (I_{n,m}) spécifique à la voie de circulation (T_{n,m}) trouvée est lue à partir de la carte routière (12).

10. Procédé selon la revendication 8, **caractérisé en ce que** l'information de direction de circulation (I_{n,m}) spécifique pour la voie de circulation est déterminée à partir de la position relative de la voie de circulation (T_{n,m}) trouvée par rapport à toutes les voies de circulation (T_{n,m}) du tronçon de route (Sₙ) et à partir d'une consigne d'évaluation (K) mémorisée.

11. Procédé selon la revendication 10, **caractérisé en ce que** l'unité embarquée (4) reçoit la consigne d'évaluation (K) par l'intermédiaire d'une liaison par radio (15) et la mémorise.

12. Procédé selon la revendication 10, **caractérisé en ce que** l'unité embarquée (4) mémorise au moins deux consignes d'évaluation (K), différentes l'une de l'autre, associées chaque fois à des tronçons de route (Sₙ) différents, dans lequel lors de la détermination de l'information de direction de circulation (I_{n,m}) spécifique à la voie de circulation cette consigne d'évaluation (K) est choisie qui est associée au tronçon de route (Sₙ) emprunté.

13. Procédé selon l'une des revendications 8 à 12, **caractérisé en ce que** l'information de direction de circulation (I_{n,m}) n'est déterminée que dans le cas où le tronçon de route (Sₙ) est marqué dans la carte routière (12) pour l'indication d'une information de direction de circulation (I_{n,m}).

14. Procédé selon l'une des revendications 8 à 13, **caractérisé en ce que** l'unité d'indication (10) indique l'information de direction de circulation (I_{n,m}) sous la forme d'un conseil de conduite à gauche/à droite (L,R), éventuellement avec une représentation graphique.

15. Procédé selon l'une des revendications 8 à 14, **caractérisé en ce que** l'unité embarquée (4) reçoit en outre une valeur de mesure de la vitesse (v) d'au moins une autre unité embarquée (4) transportée par un autre véhicule (Cᵢ₊₁) par l'intermédiaire d'une liaison par radio (15), dans lequel lors de la détection d'un bouchon de circulation, il est tenu compte de manière complémentaire de la valeur de mesure de la vitesse (v) reçue.

16. Procédé selon la revendication 15, **caractérisé en ce que** l'unité embarquée (4) lit la valeur de mesure de la vitesse (v) reçue à partir d'un « Common Awareness Message » selon le standard ETSI ITS-G5 ou d'un « Basic Safety Message » selon le standard IEEE 802.11p ou WAVE.
